(19) Europäisches Patentamt
European Patent Office
Office européen des brevets

(11) **EP 3 693 928 B1**

(12) **EUROPÄISCHE PATENTSCHRIFT**

(45) Veröffentlichungstag und Bekanntmachung des Hinweises auf die Patenterteilung:
**01.06.2022 Patentblatt 2022/22**

(21) Anmeldenummer: **19159454.8**

(22) Anmeldetag: **26.02.2019**

(51) Internationale Patentklassifikation (IPC):
***G06T 11/00*** (2006.01)

(52) Gemeinsame Patentklassifikation (CPC):
**G06T 11/005**

(54) **BERECHNUNG EINER BILDMATRIXGRÖSSE**

CALCULATION OF AN IMAGE MATRIX SIZE

CALCUL D'UNE GRANDEUR DE MATRICE D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2019 EP 19156188**

(43) Veröffentlichungstag der Anmeldung:
**12.08.2020 Patentblatt 2020/33**

(73) Patentinhaber: **Siemens Healthcare GmbH**
**91052 Erlangen (DE)**

(72) Erfinder:
• **Feuerlein, Ute**
**91052 Erlangen (DE)**
• **Petersilka, Martin**
**91325 Adelsdorf (DE)**
• **Raupach, Rainer**
**91336 Heroldsbach (DE)**
• **Sunnegaardh, Johan**
**91052 Erlangen (DE)**

(56) Entgegenhaltungen:
• **AKINORI HATA ET AL: "Effect of Matrix Size on the Image Quality of Ultra-high-resolution CT of the Lung", ACADEMIC RADIOLOGY, Bd. 25, Nr. 7, 17. Januar 2018 (2018-01-17), Seiten 869-876, XP055616265, AMSTERDAM, NL ISSN: 1076-6332, DOI: 10.1016/j.acra.2017.11.017**
• **Paul Burstein ET AL: "A GUIDE TO COMPUTED TOMOGRAPHY SYSTEM SPECIFICATIONS", , August 1990 (1990-08), XP055616416, WRIGHT-PATTERSON AIR FORCE BASE, OHIO, US Gefunden im Internet: URL:https://apps.dtic.mil/dtic/tr/fulltext /u2/a229998.pdf [gefunden am 2019-08-29]**

**EP 3 693 928 B1**

**Beschreibung**

Die Erfindung betrifft Mittel zur Berechnung einer Bildmatrixgröße für die Rekonstruktion von medizinischen Bilddaten. Die Erfindung bezieht sich insbesondere auf medizinische Bilddaten in Form von klinischen Bildaufnahmen aus der Computertomographie.

Eine an sich bekannte Computertomographie-Anlage umfasst ein Messsystem umfassend eine (möglichst) hohe Anzahl von verfügbaren Detektorkanälen und einen möglichst kleinen Röhrenfokus. Die Computertomographie-Anlage könnte erheblich effizienter genutzt werden, wenn für die Rekonstruktion der medizinischen Bildaufnahme aus den mittels der Detektorkanäle erfassten Röntgenprojektionsdaten eine größere Bildmatrix verwendet würde, was zu einer höheren räumlichen Auflösung führt. Dadurch könnte die Bildqualität verbessert werden. Bei Thorax-Aufnahmen könnten dadurch bspw. Stufenartefakte an scharfen Kanten mit hohem Kontrast verringert oder gar vermieden werden. Mit der Größe der Bildmatrix steigt jedoch nicht nur die Bildqualität, sondern auch die benötigte Rekonstruktionszeit, sowie das benötigte Speichervolumen. Insofern gilt es bei jeder Untersuchung, eine für die Untersuchungsart optimale Matrixgröße gegen die übrigen genannten Parameter abzuwägen.

Bekannt ist es, eine typischerweise vorab festgelegte Matrix in der Größe 512 x 512 zu verwenden. Dies bedeutet, dass eine zwei-dimensionale (Schicht-) Bildaufnahme aus den Projektionsdaten generiert wird, welche in zwei Raumdimensionen jeweils 512 Bildelemente, also Pixel, aufweist. In anderen Fällen kann der Bediener manuell eine Matrix von 256 x 256 auswählen, z.B. für Cardio Multiphasen Rekonstruktionen. Bei derartigen Akquisitionen wird eine extrem hohe Anzahl an Bildern erzeugt, wobei diese Bilder vorrangig dazu genutzt werden, um Veränderungen über die Zeit zu veranschaulichen. Räumliche Gradienten sind bei dieser Untersuchungsart also weniger relevant als zeitliche Gradienten. Die damit einhergehende Verringerung der räumlichen Auflösung ist für diese Untersuchungsart also akzeptabel. Würde hier die typische Matrixgröße von 512 X 512 beibehalten werden, wäre das in einem Bildarchiv (z.B. einem PACS) benötigte Speichervolumen unverhältnismäßig hoch.

Die Druckschrift "Effect of Matrix Size on the Image Quality of Ultra-high-resolution CT of the Lung" (Akinori Hata et al. in Acad. Radiol. 2018, Bd.25, Seiten 869-876, DOI: 10.1016/j.acra.2017.11.017) beschreibt Ultra-high-resolution CT Bildgebung an Lungen unter Verwendung verschiedener Bildmatrixgrößen und Auswirkungen auf die Bildqualität.

Die Druckschrift "A GUIDE TO COMPUTED TOMOGRAPHY SYSTEM SPECIFICATIONS"(Paul Burstein et al., August 1990 (1990-08), Interim Report for Period July 1989 - December 1989, WRIGHT-PATTERSON AIR FORCE BASE, OHIO) beschreibt Auswirkungen der Auflösung auf das Bildfeld eines Computertomographiesystems für verschiedene Pixelmatrixgrößen.

Es besteht also die Aufgabe der vorliegenden Erfindung, alternative Mittel bereit zu stellen, die es ermöglichen, ohne das Erfordernis eines Bediener-Inputs und entsprechendes Hintergrundwissen des Bedieners die für die Art der Untersuchung optimale Matrixgröße automatisch zu ermitteln und einzustellen.

Diese Aufgabe wird gelöst durch ein Verfahren zur Berechnung einer Bildmatrixgröße, entsprechende Recheneinheit, entsprechendes Computertomographiesystem, Computerprogramm und entsprechendes computerlesbares Medium gemäß den unabhängigen Ansprüchen. Bevorzugte und/oder alternative, vorteilhafte Ausgestaltungsvarianten sind Gegenstand der abhängigen Ansprüche.

Nachstehend wird die erfindungsgemäße Lösung der Aufgabe in Bezug auf das beanspruchte Verfahren als auch in Bezug auf die beanspruchten Vorrichtungen beschrieben. Hierbei erwähnte Merkmale, Vorteile oder alternative Ausführungsformen sind ebenso auf die anderen beanspruchten Gegenstände zu übertragen und umgekehrt. Mit anderen Worten können gegenständliche Ansprüche (die beispielsweise auf ein Verfahren gerichtet sind) auch mit Merkmalen, die in Zusammenhang mit einer der Vorrichtungen beschrieben oder beansprucht sind, weitergebildet sein. Die entsprechenden funktionalen Merkmale des Verfahrens werden dabei durch entsprechende gegenständliche Module oder Einheiten ausgebildet.

Die vorliegende Erfindung betrifft in einem ersten Aspekt ein Verfahren zur Berechnung einer Bildmatrixgröße für die Rekonstruktion von Bilddaten eines Untersuchungsobjektes aus Projektionsdaten. Die Projektionsdaten wurden bei einer relativen Rotationsbewegung zwischen einer Strahlungsquelle eines Computertomographiesystems und dem Untersuchungsobjekt erfasst. Die berechnete Bildmatrixgröße wird zur Rekonstruktion der Bilddaten aus den Projektionsdaten einer Rekonstruktionseinheit zur Verfügung gestellt.

Die vorliegende Erfindung basiert auf der Erkenntnis, dass die Bildmatrixgröße in Abhängigkeit des axialen Bildfeldes des Computertomographiesystems und einem Schärfewert in den zu rekonstruierenden Bilddaten berechnet wird. Bevorzugt hängt die Bildmatrixgröße von einem Produkt aus Ausdehnung des axialen Bildfeldes und dem Schärfewert ab.

Das axiale Bildfeld bzw. die Ausdehnung desselben bezeichnet die räumliche Erstreckung des Sichtfeldes des Computertomographiesystems bei der Projektionsdatenerfassung in einer Richtung senkrecht zur Rotationsachse des Computertomographiesystems. Das axiale Bildfeld kann unveränderlich oder durch die Röntgenstrahlenquelle bzw. mittels wenigstens einer Blendenvorrichtung einstellbar ausgebildet sein. Das axiale Bildfeld definiert die Größe des

2

Körperabschnittes oder Körperteils oder Körperbereichs des Untersuchungsobjektes, der mittels der Projektionsdaten abgebildet und von Röntgenstrahlung durchsetzt wird. Das axiale Blickfeld kann zum Beispiel circa 40cm abdecken und somit die Erfassung von Projektionsdaten über die gesamte Breite eines Patienten hin ermöglichen. Eine mögliche Anwendung wäre eine computertomographische Untersuchung eines vollständigen Abdomens. In einem anderen Beispiel deckt das axiale Blickfeld bspw. nur wenige Zentimeter ab, bspw. wenn nur ein einzelnes Organ, insbesondere das Herz abgebildet werden soll.

Der Schärfewert in den zu rekonstruierenden Bilddaten bezeichnet eine gewünschte, vorab festgelegte maximale Ortsfrequenz bzw. räumliche Auflösung bzw. Ortsauflösung, die in den rekonstruierten Bilddaten vorhanden sein muss. Der Schärfewert entspricht einer Ortsfrequenz, bei der die Modulationstransferfunktion bzw. die Modulationsübertragungsfunktion bzw. Kontrastübertragungsfunktion einen bestimmten Wert erreicht. Diese Funktion beschreibt allgemein das von der Ortsfrequenz des Objektes abhängige Verhältnis aus Detailkontrast des Bildes eines Objektes und dem Detailkontrast des Objektes ans sich. Mit anderen Worten beschreibt die Modulationstransferfunktion ein Maß für die Abbildungsgüte des bildgebenden Systems. Je höher der Wert der Modulationstransferfunktion, umso besser die Abbildung des Objektes durch das bildgebende System. In diesem Sinne ist der Schärfewert als eine Ortsfrequent anzusehen, bei der die Modulationstransferfunktion einen bestimmten Wert, bspw. 10 Prozent oder 0,1 annimmt. Insofern kann, anstelle einer direkten Vorgabe des Schärfewertes auch ein Wert der Modulationstransferfunktion vorgegeben bzw. vorab festgelegt werden. Durch die Abhängigkeit der Modulationstransferfunktion von der Ortsfrequenz kann der Schärfewert direkt abgeleitet werden.

Der Schärfewert kann insbesondere mit der Einheit Linienpaare pro Millimeter (lp/mm) angegeben werden. Der Schärfewert wird insbesondere bestimmt durch die medizinische Fragestellung, die der radiologischen Untersuchung zu Grunde liegt und die mittels der rekonstruierten Bilddaten beantwortet werden soll. Der Schärfewert kann auch vordefiniert sein durch den abgebildeten Körperbereich und die darin vorhandene Gewebezusammensetzung.

Die Berechnung erfolgt erfindungsgemäß automatisch und ohne Zutun eines Bedieners. Es kann vorteilhaft vorgesehen sein, dass der Bediener für jede Untersuchung bzw. jede Bilddatenrekonstruktion individuell festlegen kann, ob die Bildmatrixgröße automatisch berechnet bzw. gegenüber einer Voreinstellung optimiert werden soll. Es kann ferner vorteilhaft vorgesehen sein, eine obere, also maximale Bildmatrixgröße als Obergrenze vorab festzulegen, bspw. dann, wenn eingangs bekannt ist, dass nur eine begrenzte Speicherkapazität für die rekonstruierten Bilddaten zur Verfügung steht. Zum Beispiel kann von vorn herein eine Bildmatrixgröße von 1024 ausgeschlossen sein.

Die sich durch die Berechnung ergebende Bildmatrixgröße, im Folgenden auch nur Matrixgröße genannt, kann sowohl größer als auch kleiner als die typischerweise verwendete Matrixgröße von 512 x 512 Bildelementen, sprich Pixeln sein. Dies ermöglicht eine deutliche Verbesserung der Systemperformance, bspw. bei Echtzeit-Untersuchungen wie einer Bolus-Nachverfolgung (Bolus-Tracking) oder allgemein einer Bildgebung unter Kontrastmitteleinfluss, da derart die Dauer der Rekonstruktion der Bilddaten aus den Projektionsdaten reduziert werden kann.

Unter Projektionsdaten im Sinne der Erfindung sind Röntgenabschwächungsprofile bzw. Röntgenprojektionsmessdaten des Untersuchungsobjektes zu verstehen, die sich ergeben, wenn das Untersuchungsobjekt von Röntgenstrahlung durchleuchtet wird, welche durch die anatomischen Strukturen des Untersuchungsobjektes in ihrer Intensität abgeschwächt und in ihrem Energiespektrum verändert wird. Die Projektionsdaten umfassen typischerweise eine Vielzahl von Einzelprojektionen, die sich in ihrer Blickrichtung bzw. ihrem Winkel durch das Untersuchungsobjekt unterscheiden. Die Projektionsdaten betreffen folglich den Projektionsraum bzw. werden in diesem erfasst. Aus den Einzelprojektionen lassen sich mittels eines Rekonstruktionsalgorithmus Bilddaten in Sinne wenigstens eines zweidimensionalen Schnittbildes oder eines Volumendatensatzes des Untersuchungsobjektes errechnen.

Ein Untersuchungsobjekt im Sinne der Erfindung ist ein Patient, wobei es sich meist um einen Menschen handelt. Grundsätzlich kann der Patient auch ein Tier sein. Im Folgenden werden daher die beiden Begriffe "Untersuchungsobjekt" und "Patient" synonym verwendet.

Ein Rekonstruktionsalgorithmus im Sinne der Erfindung ist als ein an sich bekanntes Verfahren zur Rekonstruktion von Bilddaten aus den Projektionsdaten zu verstehen. Die Bilddaten betreffen insofern den Bildraum bzw. liegen in diesem vor. Ein Standardverfahren für eine Bildrekonstruktion ist ein gefiltertes Rückprojektionsverfahren (Filtered BackProjection; FBP). Nach der Projektionsdatenerfassung wird zunächst ein so genannter "Rebinning"-Schritt durchgeführt, in dem die mit einem fächerförmig sich von der Quelle ausbreitenden Strahl erzeugten Projektionsdaten so umgeordnet werden, dass sie in einer Form vorliegen, wie wenn der Detektor von parallel auf ihn zulaufenden Röntgenstrahlen getroffen würde. Die Daten werden dann in den Frequenzbereich transformiert. Im Frequenzbereich findet eine Filterung statt, und anschließend werden die gefilterten Daten rücktransformiert. Mit Hilfe der so umsortierten und gefilterten Daten erfolgt eine Rückprojektion auf die einzelnen Voxel innerhalb des interessierenden Volumens. Der approximative Ansatz der FBP-Methode verursacht jedoch niederfrequente Kegelstrahl-Artefakte und Spiralartefakte. Zudem ist die Bildschärfe an das Bildrauschen gekoppelt. Demgegenüber bevorzugt sind iterative Rekonstruktionsverfahren. Hierbei werden zunächst initiale Bilddaten aus den Projektionsdaten bzw. den Projektionsmessdaten rekonstruiert. Hierzu kann beispielsweise ein Faltungsrückprojektionsverfahren verwendet werden. Ein "Projektor", also ein Projektionsoperator, der das Messsystem mathematisch möglichst gut abbildet, projiziert die initialen Bilddaten, um synthetische Projektionsdaten zu erzeugen. Die Differenz zu den ursprünglichen Projektionsdaten wird mit dem zu dem Projektor adjungierten Operator rückprojiziert und dann ein Residuum-Bild rekonstruiert, mit dem das initiale Bild aktualisiert wird. Die aktualisierten Bilddaten können wiederum verwendet werden, um in einem nächsten Iterationsschritt mit Hilfe des Projektionsoperators neue synthetische Projektionsdaten zu erzeugen, daraus wieder die Differenz zu den Messsignalen zu bilden und ein neues Residuum-Bild zu berechnen, mit dem wieder die Bilddaten der aktuellen Iterationsstufe verbessert werden, usw. Mit einem solchen Verfahren lassen sich Bilddaten rekonstruieren, die eine verbesserte Bildschärfe bei geringem Bildrauschen aufweisen. Beispiele für iterative Rekonstruktionsverfahren sind die algebraische Rekonstruktionstechnik (ART), die simultane algebraische Rekonstruktionstechnik (SART), die iterierte gefilterte Rückprojektion (IFBP), oder auch statistische iterative Bildrekonstruktionstechniken. Bevorzugte Rekonstruktionsverfahren, die zusammen mit dem erfindungsgemäßen Verfahren zur Anwendung kommen können, sind bspw. die Sinogramm-gestützte iterative Rekonstruktion oder auch eine Modell-basierte iterative Rekonstruktion.

In einer Ausführungsform des Verfahrens erfolgt die Berechnung der Bildmatrixgröße in Abhängigkeit einer Mindest-Schrittweite für die Bildmatrixgröße. Eine Mindest-Schrittweite beschreibt eine vorab festgelegte Anzahl Bildelemente, insbesondere Pixel, um welche die zu berechnende Bildmatrixgröße erhöht oder verkleinert werden kann. Die Mindest-Schrittweite kann bevorzugt 32, 64, 128, besonders bevorzugt 256, Bildelemente betragen. Mit anderen Worten kann die Bildmatrixgröße vorteilhaft nur inkrementell verändert werden. Je kleiner die Mindest-Schrittweite gewählt wird, umso besser kann die Bildmatrixgröße den jeweiligen bei der Berechnung eingehenden Parametern Rechnung tragen. Die erfindungsgemäße Einführung einer Mindest-Schrittweite vereinfacht jedoch den Berechnungsschritt gegenüber einer stufenlosen Bildmatrixgröße.

Besonders vorteilhaft kann die Mindest-Schrittweite individuell durch einen Bediener vor einer Röntgen-Untersuchung angepasst werden.

In einer anderen Ausführungsform des Verfahrens erfolgt die Berechnung der Bildmatrixgröße unter Berücksichtigung von wenigstens einem Parameter des Rekonstruktionsalgorithmus und/oder seinem Rekonstruktionskern. Die Berücksichtigung von Rekonstruktionsparametern bzw. des Rekonstruktionskerns beeinflusst vorteilhaft eine Performance, insbesondere eine Geschwindigkeit bzw. Dauer eines Rekonstruktionsprozesses. Eine Anpassung der Bildmatrixgröße an Parameter der durchzuführenden Rekonstruktion kann eine Untersuchungsdauer positiv verkürzen, sowohl aus Sicht des Bedieners als auch aus Sicht des Patienten.

Ein Rekonstruktionskern im Sinne der vorliegenden Erfindung entspricht dem bei der Rekonstruktion der Bilddaten eingesetzten Faltungskern. Der Rekonstruktionskern wird dabei auf die Projektionsdaten angewandt. Der Rekonstruktionskern kann glättend oder kontrastverstärkend sein. Der Rekonstruktionskern kann insbesondere entsprechend einer Untersuchungsart, einer der Untersuchung zugrunde liegenden medizinischen Fragestellung und/oder einer zu untersuchenden Körperregion ausgewählt bzw. angepasst werden. Zum Beispiel sind kontrastverstärkende Rekonstruktionskerne speziell für die Darstellung von Knochen- oder Lungengewebe bekannt. Die Wahl des Rekonstruktionskerns hat maßgeblichen Einfluss auf die Qualität der rekonstruierten Bilddaten. Ein für ein zu befundendes Gewebe geeigneter Rekonstruktionskern kann auch ohne Qualitätseinbußen die notwendige Strahlendosis vorteilhaft reduzieren.

Bei dem Rekonstruktionsalgorithmus handelt es sich, wie weiter oben schon erwähnt, bevorzugt um einen iterativen Rekonstruktionsalgorithmus.

Ein Parameter des Rekonstruktionsalgorithmus kann bspw. die Anzahl an Vorwärts- und Rückprojektionsschleifen oder die Anzahl der Artefaktkorrektur- oder Rauschminimierungsschleifen sein, die innerhalb der Rekonstruktion durchlaufen werden. Diese Parameter richten sich typischerweise nach dem untersuchten Körperbereich bzw. dem abgebildeten Organ oder Gewebe, die sich in ihrer Wechselwirkung mit Röntgenstrahlung deutlich voneinander unterscheiden können.

In einer anderen Ausführungsform des Verfahrens erfolgt die Berechnung der Bildmatrixgröße unter Berücksichtigung einer zu erzielenden Mindest-Bildqualität der Bilddaten. Die Bildqualität umfasst dabei nicht nur eine gewünschte räumliche Mindestauflösung, die gewährleistet werden soll, sondern auch Vorgaben im Hinblick auf maximal tolerierbare Bildfehler bzw. Artefakte, wie bspw. das Bildrauschen oder Metallartefakte, die durch metallische Implantate im abgebildeten Körperbereich bedingt sein können.

In einer anderen Ausführungsform des Verfahrens erfolgt die Berechnung der Bildmatrixgröße unter Berücksichtigung einer der Projektionsdatenerfassung zugrunde liegenden medizinischen Fragestellung und/oder wenigstens einem Parameter des für die Projektionsdatenerfassung verwendeten Messprotokolls und/oder eines Parameters repräsentierend die abgebildete Körperregion bzw. das darin umfasste Gewebe. Die medizinische Fragestellung ist im Sinne der Erfindung als klinischer Anfangsverdacht, als Zuweisungsauftrag oder dergleichen zu verstehen, aus dem sich der Grund für die radiologische Untersuchung des Untersuchungsobjektes ergibt. In dieser Ausführung wird vorteilhaft berücksichtigt, dass medizinische Fragestellung, untersuchte Körperregion und/oder ein verwendetes Messprotokoll eine bestimmte Bildmatrixgröße erfordern bzw. eine Ober- oder Untergrenze für die Bildmatrixgröße vorgeben können.

In einer Ausführungsform des Verfahrens erfolgt die Berechnung der Bildmatrixgröße unter Berücksichtigung einer verfügbaren Speicherkapazität für die rekonstruierten Bilddaten.

Diese Ausführung der Erfindung trägt der Erkenntnis Rechnung, dass nur begrenzter Speicherplatz für rekonstruierte Bilddaten zur Verfügung stehen kann. Mit anderen Worten kann die Summe der rekonstruierten Bilddaten zu einer Untersuchung größer sein, als eine verfügbare Speicherkapazität, bspw. in einem PACS-System (Pichture Archiving and Communication System) einer medizinischen Einrichtung. Die Bildmatrixgröße wird hier von vorn herein auf das maximal speicherbare Datenvolumen angepasst.

Erfindungsgemäß erfolgt die Berechnung der Bildmatrixgröße gemäß folgender Vorschrift

$$N = \Delta N * \left\lceil 2 * a * \frac{F_{ax} * \rho_c}{\Delta N} \right\rceil$$

Dabei ist **N** - die berechnete Bildmatrixgröße (in einer Raumdimension),

$\Delta N$ - die Mindest-Schrittweite,
$F_{ax}$ - das axiale Bildfeld,
$\rho_c$ - der Schärfewert, und
$a$ - ein freier Skalierfaktor.

Das axiale Bildfeld ist, wie eingangs bereits erwähnt, im Sinne der Erfindung als die Ausdehnung des Bildfeldes eines Computertomographiesystems zu verstehen, welches sich senkrecht seiner Rotationsachse erstreckt. Der Schärfewert ist, wie ebenfalls eingangs erwähnt, als die gewünschte, maximale Ortsfrequenz (lp/mm) in den rekonstruierten Bilddaten zu verstehen. In dieser Ausführung wird das Produkt aus axialem Bildfeld und Schärfewert ins Verhältnis zu der Mindest-Schrittweite gesetzt. Der freie Skalierfaktor $a$ kann in einer bevorzugten Ausführungsform als Proportionalitätskonstante ausgebildet sein, die bevorzugt einen Wert von $a \approx 1$ annimmt. Die nach unten geöffnete Klammer in der Gleichung zeigt an, dass der umfasste Term ggf. auf die nächste ganze Zahl aufgerundet wird. Die Rundungsoperation ist indes optional.

Gemäß einer erfindungsgemäßen Alternative erfolgt die Berechnung der Bildmatrixgröße gemäß der Vorschrift

$$N = \min\left\{N_{max}, \ max\left(N_{min}, \Delta N * \left\lceil 2 * \frac{F_{ax} * \rho_c * f}{\Delta N} + c \right\rceil\right)\right\}$$

Dabei ist $N$ - die berechnete Bildmatrixgröße,

$\Delta N$ - die Mindest-Schrittweite,
$N_{max}$ - eine maximal zulässige Bildmatrixgröße,
$N_{min}$ - eine minimal zulässige Bildmatrixgröße,
$F_{ax}$ - das axiale Bildfeld,
$\rho_c$ - der Schärfewert,
$f$ - ein freier Skalierfaktor, und
$c$ - ein freier Offset-Parameter ist.

In dieser Ausführungsform wird neben einer maximal zulässigen Bildmatrixgröße $N_{max}$ auch eine minimal zulässige Bildmatrixgröße $N_{min}$ vorab definiert. Diese kann von der Untersuchungsart, der medizinischen Fragestellung, der untersuchten Körperregion bzw. des untersuchten Gewebes oder Organs, bspw. des Herzens, und/oder dergleichen abhängen, und derjenigen Bildmatrixgröße entsprechen, die für eine verlässliche Befundung der rekonstruierten Bilddaten mindestens erforderlich ist. Der freie Skalierfaktor $f$ sowie der freie Offset-Parameter $c$ können jeweils bevorzugt aus einer Analyse von Rekonstruktionsparametern von einer Vielzahl von bereits abgeschlossenen Rekonstruktionsaufträgen bspw. empirisch, bestimmt werden. Hierzu können bspw. alle verfügbaren Rekonstruktionsaufträge von im Feld befindlichen Computertomographiesystemen eines Herstellers ausgewertet werden. Durch den freien Skalierfaktor $f$ und den freien Offset-Parameter $c$ können Umschaltpunkte zwischen benachbarten Bildmatrixgrößen so beeinflusst werden, dass zum Beispiel ein ausgewogenes Verhältnis zwischen Bildqualität und RekonstruktionsPerformance, insbesondere Rekonstruktionsgeschwindigkeit, erzielt wird. Auch hier zeigt die nach unten geöffnete Klammer in der Gleichung an, dass der umfasste Term ggf. auf die nächste ganze Zahl aufgerundet wird. Die Rundungsoperation ist auch hier optional. In dieser Ausführungsvariante wird zunächst das Maximum aus der Gruppe der zuvor festgelegten minimal zulässigen Bildmatrixgröße $N_{min}$ und der sich aus den Größen axiales Bildfeld, Schärfewert, Skalierfaktor, Offset-Parameter, und Mindest-Schrittweite ergebenden Bildmatrixgröße gemäß $\Delta N * \left[2 * \frac{F_{ax} * \rho_c * f}{\Delta N} + c\right]$ ermittelt. Das ermittelte Maximum dieses Vergleichs wird anschließend mit der maximal zulässigen Bildmatrixgröße $N_{max}$ verglichen und der kleinere der beiden Werte ermittelt. Der so ermittelte Wert entspricht der berechneten Bildmatrixgröße.

In einer weiteren Ausführung des Verfahrens wird der Schärfewert unter Berücksichtigung eines Funktionals der Modulationsübertragungsfunktion des Computertomographiesystems berechnet.

Wie eingangs bereits erwähnt beschreibt die Modulationstransferfunktion bzw. die Kontrasttransferfunktion das Verhältnis aus Bildkontrast zu Objektkontrast. Sie ist spezifisch für ein Abbildungssystem, hier das verwendete Computertomographie-System. Dieses Verhältnis hängt ab von der tatsächlichen Ortsfrequenz des Objektes. Je höher die Ortsfrequenz ist, desto schlechter ist typischerweise das Verhältnis aus Bildkontrast und Objektkontrast, mit anderen Worten, umso geringer sind Bildkontrast und Bildschärfe.

Anstelle eines konkreten Schärfewertes, der die Modulationstransferfunktion nur in einem Punkt repräsentiert (den, an welchem die Modulationstransferfunktion den gewünschten Wert, bspw. 10% annimmt), kann für die Berechnung der Bildmatrixgröße eine allgemeine Zuordnung in Form eines Funktionals verwendet werden, die die gesamte Modulationstransferfunktion berücksichtigt, bspw. in Form von $\rho_c = F[MTF]$, wobei MTF für die Modulationstransferfunktion steht. In dieser Ausführungsvariante kann vorteilhaft der gesamte Ortsfrequenzgang berücksichtigt werden. Alternativ können nur bestimmte, ausgewählte Ortsfrequenzen berücksichtigt werden. Mit anderen Worten wird in dieser Ausführung eine bessere Berücksichtigung des tatsächlichen Verlaufs der für das Abbildungssystem spezifischen Modulationstransferfunktion erzielt. Entsprechend einem Beispiel kann ein Mittelwert aus zwei Frequenzen berechnet werden, um den Schärfewert **zu** bilden, bspw. $\rho_c = \frac{1}{2} *$ ($\rho_{50}$ + $\rho_{10}$), wobei $\rho_{50}$ und $\rho_{10}$ jeweils den Frequenzen entsprechen, bei denen die Modulationstransferfunktion den Wert 10% bzw. 50% erreicht. Anstelle von zwei diskreten Werten der Modulationstransferfunktion können über das Funktional beliebig viele diskrete Werte berücksichtigt werden. Dabei kann vorgesehen sein, dass alle entsprechenden Ortsfrequenzen mit einem Gewichtungsfaktor eingehen, der für alle Frequenzwerte gleich oder unterschiedlich sein kann. Letztlich ließe sich in einer weiteren bevorzugten Ausführungsvariante der gesamte Verlauf der Modulationstransferfunktion über den Schärfewert berücksichtigen, sodass die gesamte Modulationstransferfunktion in die Berechnung des Schärfewerts eingeht.

Zusammenfassend erübrigt die vorliegende Erfindung für den Bediener bei der Wahl einer für eine Untersuchung eines Untersuchungsobjektes optimalen Bildmatrixgröße eine mitunter schwere Abwägung zwischen den verschiedenen Einflussgrößen. Die notwendige Speicherkapazität kann dennoch auf ein Minimum beschränkt werden.

In einem anderen Aspekt betrifft die Erfindung eine Recheneinheit zur Berechnung einer Bildmatrixgröße für die Rekonstruktion von Bilddaten eines Untersuchungsobjektes aus Projektionsdaten, wobei die Recheneinheit ausgebildet ist,

- Projektionsdaten, die bei einer relativen Rotationsbewegung zwischen einer Strahlungsquelle eines Computertomographiesystems und dem Untersuchungsobjekt erfasst wurden, zu erfassen,
- die Bildmatrixgröße gemäß den Schritten des erfindungsgemäßen Verfahrens zu berechnen.

In einer bevorzugten Ausgestaltung umfasst die Recheneinheit auch eine Rekonstruktionseinheit, die ausgebildet ist, die berechnete Bildmatrixgröße zu erfassen und damit die Bilddaten aus den Projektionsdaten zu rekonstruieren.

Vorteilhaft ist die Recheneinheit in das Computertomographiesystem integriert. Alternativ kann die Recheneinheit auch entfernt bzw. abgelegen angeordnet sein. Die Recheneinheit kann ausgebildet sein, das gesamte erfindungsgemäße Verfahren für das Computertomographiesystem oder für eine Vielzahl von Anlagen durchzuführen, z.B. in einem Radiologie-Zentrum oder Krankenhaus umfassend mehrere Computertomographie-Systeme.

In einem anderen Aspekt betrifft die Erfindung ein Computertomographiesystem zur Berechnung einer Bildmatrixgröße für die Rekonstruktion von Bilddaten eines Untersuchungsobjektes aus Projektionsdaten, umfassend

- eine erfindungsgemäße Recheneinheit, und
- eine Rekonstruktionseinheit zum Rekonstruieren von Bilddaten aufweisend die berechnete Bildmatrixgröße aus den Projektionsdaten.

Das Computertomographiesystem kann vorteilhaft auch eine Erfassungseinheit zum Erfassen der Projektionsdaten umfassen. Die Erfassungseinheit kann als Röntgenstrahlendetektor, direkt oder indirekt konvertierend, ausgebildet sein. Die Erfassungseinheit kann eine Schnittstelle zu der Recheneinheit aufweisen, über welche Schnittstelle die Projektionsdaten an die Recheneinheit übertragen werden.

Die Rekonstruktionseinheit kann vorteilhaft von der Recheneinheit des Computertomographiesystems umfasst sein. Sie können jeweils als einzelne oder mehrere Komponenten, also Prozessor oder Computer ausgebildet sein, die zudem räumlich zusammenhängend, aber auch räumlich getrennt voneinander angeordnet sein können. Die Recheneinheit und Rekonstruktionseinheit können besonders bevorzugt in der Cloud angesiedelt sein.

Das Computertomographiesystem kann vorteilhaft auch eine Anzeige-Vorrichtung umfassen, auf welcher für einen Betrachter rekonstruierte Bilddaten direkt angezeigt werden können.

In einem anderen Aspekt betrifft die Erfindung ein Computerprogramm, welches direkt in eine Speichereinheit einer erfindungsgemäßen Recheneinheit ladbar ist, mit Programmabschnitten, um die Schritte des erfindungsgemäßen Verfahrens auszuführen, wenn das Computerprogramm in der Recheneinheit ausgeführt wird.

In einem anderen Aspekt betrifft die Erfindung ein computerlesbares Medium, auf welchem von einer erfindungsgemäßen Recheneinheit einlesbare und ausführbare Programmabschnitte gespeichert sind, um alle Schritte des erfindungsgemäßen Verfahrens auszuführen, wenn die Programmabschnitte von der Recheneinheit ausgeführt werden.

Die Ausführung der Erfindung in Form eines Computerprogramms bzw. eines computerlesbaren Datenträgers umfassend Programmcode eines erfindungsgemäßen Computerprogramms bietet den Vorteil, dass bestehende Computersysteme bzw. Recheneinheiten leicht durch ein Software-Update angepasst werden können, um eine erfindungsgemäße Funktion zu erzielen.

Das Computerprogramm kann alternativ in Form eines Computerprogrammprodukts ausgebildet sein und zusätzliche Einheiten aufweisen. Diese können als Hardware ausgebildet sein, bspw. als Speichermedium, auf welchem das Computerprogramm gespeichert ist, und/oder ein Hardware Schlüssel, um das Computerprogramm nutzen zu können. Alternativ oder zusätzlich können sie als Software ausgebildet sein, bspw. als eine Programm-Dokumentation oder ein Software Schlüssel, um das Computerprogramm nutzen zu können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Durch diese Beschreibung erfolgt keine Beschränkung der Erfindung auf diese Ausführungsbeispiele. In verschiedenen Figuren sind gleiche Komponenten mit identischen Bezugszeichen versehen. Die Figuren sind in der Regel nicht maßstäblich. Es zeigen:

FIG 1   eine schematische Darstellung des erfindungsgemäßen Verfahrens gemäß einem Ausführungsbeispiel der vorliegenden Erfindung,

FIG 2   eine Histogramm-Auftragung einer Vielzahl von Untersuchungen entsprechend der dazu gehörigen Bildmatrixgröße für die Organcharakteristik 'Abdomen',

FIG 3   eine weitere Histogramm-Auftragung einer Vielzahl von Untersuchungen entsprechend der dazu gehörigen Bildmatrixgröße für die Organcharakteristik 'Abdomen', und

FIG 4   eine medizinische Bildgebungsanlage in Form eines Computertomographie-Systems umfassend eine erfindungsgemäße Recheneinheit gemäß einem anderen Ausführungsbeispiel der Erfindung.

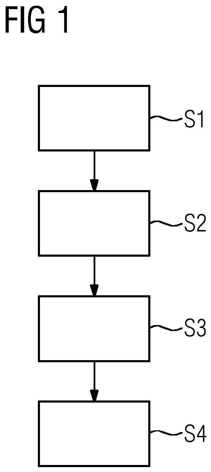

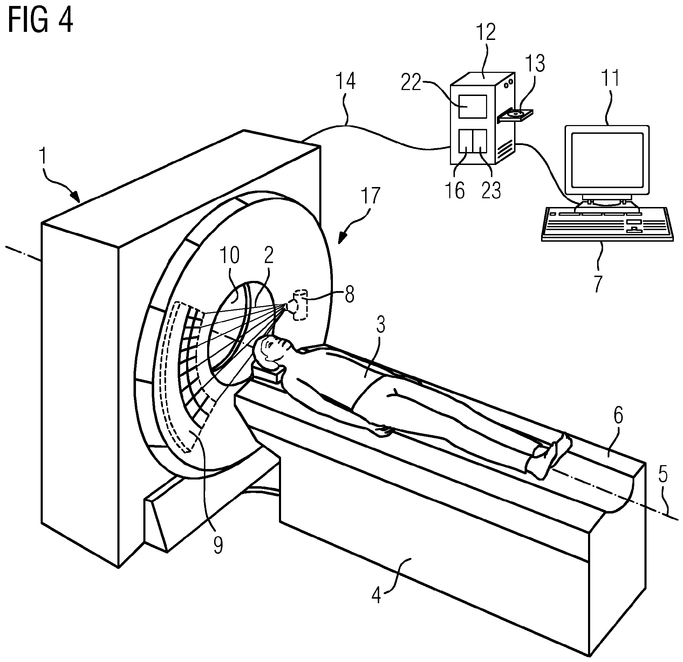

**Figur 1** zeigt eine schematische Darstellung des erfindungsgemäßen Verfahrens in einem Ausführungsbeispiel. In einem ersten Schritt S1 erfolgt ein Erfassen von Projektionsdaten, die bei der Untersuchung eines Patienten 3 mit einem Computertomographiesystem erzeugt wurden. Das Erfassen erfolgt bspw. mit einer Recheneinheit 12, wie sie mit Bezug zu Figur 4 noch näher beschrieben wird.

Die Projektionsdaten können bspw. direkt von einer Aufnahmeeinheit 17 umfassend einen Röntgendetektor 9 des Computertomographiesystems 1 an die Recheneinheit 12 über an sich bekannte Verbindungen übertragen werden.

In einem zweiten Schritt S2 erfolgt ein Erfassen bzw. Ermitteln des axialen Bildfeldes des Computertomographiesystems 1, welches bei der Erfassung der Projektionsdaten verwendet bzw. eingestellt wurde. Das Erfassen bzw. Ermitteln erfolgt durch die Recheneinheit 12 bzw. über entsprechende Kommunikationsschnittstellen. Diese Information kann bspw. manuell durch einen Benutzer mittels Eingabeeinheit 7 eingegeben oder aber automatisch abgerufen oder abgeleitet werden. Die Ausdehnung des axialen Bildfeldes entspricht typischerweise der Größe des abgebildeten Körperbereichs des Patienten 3 in einer Raumdimension. Die Ausdehnung des axialen Bildfeldes kann sich bspw. durch die geplante Untersuchungsart und/oder die individuelle Patientenanatomie ergeben und/oder wird entsprechend einem bestehenden Anfangsverdacht vor der Projektionsdatenerfassung im Zuge der Aufnahme-Protokollplanung eingestellt und zusammen mit dem Aufnahme-Protokoll abgespeichert. Insofern kann die Recheneinheit 12 im Sinne der Erfindung auch mit einer Steuer- bzw. Kontrolleinheit des Computertomographiesystems in Datenkommunikation stehen, und die Ausdehnung des axialen Bildfeldes zu den erfassten Projektionsdaten erfassen.

In dem zweiten Schritt S2 erfolgt auch ein Erfassen des Schärfewertes der zu rekonstruierenden Bilddaten. Dieser Wert ist ein Maß für die Detailschärfe von abgebildeten anatomischen Strukturen in den rekonstruierten Bilddaten, der mindestens eingehalten werden muss, damit die rekonstruierten Bilddaten eine klinische Befundung gemäß der medizinischen Fragestellung oder dem Anfangsverdacht erlauben. Dieser geforderte Schärfewert kann bspw. gemäß einem Aufnahmeprotokoll vorab festgelegt und abrufbar für die Recheneinheit 12 einem Speicher 22 der Recheneinheit abrufbar, bspw. in Form einer Lookup-Tabelle, hinterlegt sein. Der Schärfewert kann alternativ durch die Recheneinheit als Funktional der für das Computertomographie-System spezifischen Modulationstransferfunktion in einer der beschriebenen Ausführungsvarianten berechnet werden. Voraussetzung dafür ist die Kenntnis der Modulationstransferfunktion des Computertomographie-Systems.

Optional kann Schritt S2 auch umfassen, eine Mindest-Schrittweite für die zu berechnende Bildmatrixgröße zu erfassen bzw. zu bestimmen. Die Mindest-Schrittweite kann bspw. durch einen Benutzer manuell über die Eingabe-Einheit 7 eingegeben werden oder aber als vorab festgelegte Größe aus Speicher 22 abgerufen werden. Die Mindest-Schrittweite definiert ein minimales Inkrement, um welches die Bildmatrixgröße verändert werden kann. Die Mindest-Schrittweite ist insbesondere ein Vielfaches der Zahl 32, also bspw. 64, 128, 256, 516, etc.

In Schritt S2 kann optional auch vorgesehen sein, den von der Rekonstruktionseinheit 23 angewandten Rekonstruktionsalgorithmus auszuwerten. Diese Auswertung umfasst eine Ermittlung von Rekonstruktionskern und/oder weiteren Rekonstruktionsparametern, die einen maßgeblichen Einfluss insbesondere auf die Geschwindigkeit des Rekonstruktionsalgorithmus bzw. die Bildqualität der rekonstruierten Bilddaten haben. Eine größere Bildmatrixgröße verursacht typsicherweise eine längere Rekonstruktionszeit. Unter Berücksichtigung des Rekonstruktionskerns bzw. von wenigstens einem Rekonstruktionsparameter kann die Bildmatrixgröße unter Beachtung weiterer Einflussgrößen vorteilhaft klein gewählt werden.

Optional kann der Schritt S2 auch ein Erfassen oder Ermitteln eines Mindest-Bildmatrixgröße und/oder einer maximalen Bildmatrixgröße umfassen. Die maximale Bildmatrixgröße kann bspw. durch eine verfügbare Speicherkapazität und/oder durch eine Rekonstruktionsperformance definiert sein. Eine Mindest-Bildmatrixgröße kann bspw. durch den Schärfewert und/oder die Pixelelement-Größe des verwendeten Röntgenstrahlendetektors 9 vorgegeben sein.

In einem dritten Schritt S3 erfolgt eine Berechnung der Bildmatrixgröße in Abhängigkeit der Ausdehnung des axialen Bildfeldes sowie des geforderten Schärfewertes.

Die Berechnung der Bildmatrixgröße umfasst die Produktbildung aus Ausdehnung des axialen Bildfeldes und dem geforderten Schärfewert.

Erfindungsgemäß erfolgt die Berechnung gemäß Gleichung (1) nach

$$N = \Delta N * \left\lceil 2 * a * \frac{F_{ax} * \rho_c}{\Delta N} \right\rceil$$

- Die Proportionalitätskonstante *a* nimmt bevorzugt einen Wert im Bereich 1 ein, sie kann bspw. zwischen 0,5 und 1,5 liegen, besonders bevorzugt ist **a = 0,8**. Die Proportionalitätskonstante kann bevorzugt empirisch ermittelt werden.
  Gemäß einer erfindungsgemäßen Alternative dazu erfolgt die Berechnung gemäß Gleichung (2) nach

$$N = \min\left\{N_{max}, \ max\left(N_{min}, \Delta N * \left\lceil 2 * \frac{F_{ax} * \rho_c * f}{\Delta N} + c \right\rceil\right)\right\}$$

- Der freie Skalierfaktor *f* entspricht im Wesentlichen der Proportionalitätskonstante *a* der alternativen Berechnungsvorschrift nach Gleichung (1) und bewegt sich in einem entsprechenden Wertebereich. Der freie Offset-Parameter *c* kann genutzt werden, um den Umschaltpunkt zwischen zwei benachbart liegenden Werten für die Bildmatrixgröße gemäß der geltenden Mindest-Schrittweite anzupassen. Der freie Offset-Parameter c kann alternativ, so wie auch in der alternativen Berechnungsvorschrift, auf null gesetzt werden.

Einflussgrößen wie Rekonstruktionskern, Rekonstruktionsparameter, die Art der Untersuchung, bspw. eine Vielbildaufnahme mit einer Vielzahl von zeitlich dicht aufeinander folgenden Einzelaufnahmen, die direkt nach der Rekonstruktion ohne wesentlichen Zeitverzug für eine Darstellung bspw. auf der Anzeigeeinheit 11 zur Verfügung stehen müssen, die abgebildete Körperregion, das abgebildete Organ oder dergleichen können einzeln oder in Kombination über die Proportionalitätskonstante **a,** den freien Skalierfaktor ***f*** und den freien Offset-Parameter **c** berücksichtigt werden. Die genannten Größen können sich insbesondere aus einer Datenbank bzw. Lookup-Tabelle ergeben, die in Speicher 22 hinterlegt sein kann. Die Datenbank kann eine Vielzahl von radiologischen Untersuchungen und den zugehörigen Rekonstruktionsaufträgen umfassend die jeweils verwendete Bildmatrixgröße umfassen. Die Vielzahl der Daten kann insbesondere auf realen an Patienten durchgeführten Untersuchungen beruhen. Die Vielzahl der Daten kann nach der abgebildeten Körperregion bzw. wenigstens eines darin umfassten Organs bzw. Gewebes unterklassifiziert sein, bspw. kann eine Datenklasse die Untersuchungen betreffen Abdomen umfassen, eine andere Datenklasse bspw. Untersuchungen betreffend den Kopf oder wieder eine andere Datenklasse Untersuchungen betreffend das Herz.

Die Proportionalitätskonstante **a,** der freie Skalierfaktor ***f*** und/oder der freie Offset-Parameter c ergeben sich somit bevorzugt empirisch anhand der verfügbaren oder abrufbaren Einflussgrößen.

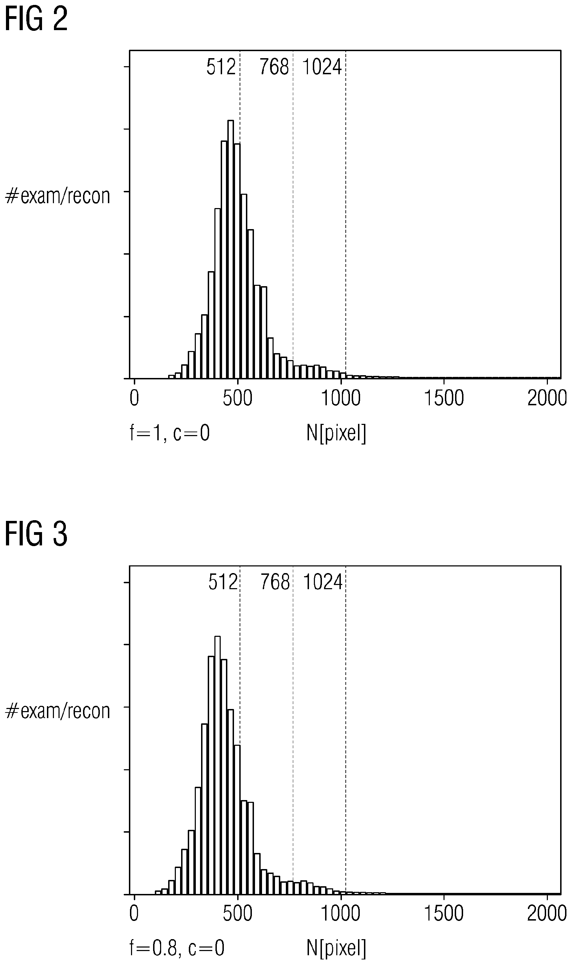

Beispielhaft zeigen die **Figuren 2 und 3** jeweils eine schematische Histogramm-Analyse der sich rechnerisch ergebenden Bildmatrixgröße der zu rekonstruierenden Bilddaten für die Organcharakteristik "Abdomen", hier mit einer Binbreite von 32 Pixeln für die Berechnungsmethode gemäß Gleichung (2). Aufgetragen ist die Häufigkeit der radiologischen Untersuchungen und dazu gehörigen Rekonstruktionsprozesse über der sich aus den oben aufgeführten Einflussgrößen ergebenden Bildmatrixgröße. Die Bildmatrixgröße des Rekonstruktionsauftrages kann in diesem Beispiel die diskreten Werte 512, 768 oder 1024 einnehmen. Mit anderen Worten, liegt hier die minimale Bildmatrixgröße bei 512, die maximale Bildmatrixgröße bei 1024, die Mindest-Schrittweite beträgt 256. Durch die freien Parameter $f$ und c können die Umschaltpunkte so beeinflusst werden, dass ein ausgewogenes Verhältnis zwischen Bildqualität und Rekonstruktionsperformance erzielt wird. Figur 2 und Figur 3 unterscheiden sich durch die Werte des freien Parameters $f$ und die dadurch bedingte Verschiebung der Histogramm-Kurve. Dies führt in Figur 3 zu einer erhöhten Anzahl von Rekonstruktionsaufträgen mit der Bildmatrixgröße 512.

Die in Figuren 2 und 3 dargestellten Histogramme lassen keine Rückschlüsse auf Histogramme mit anderer Organ-Charakteristik zu.

In einem weiteren Schritt S4 wird die so berechnete Bildmatrixgröße für den Rekonstruktionsprozess bereitgestellt. Insbesondere kann vorgesehen sein, dass die Datenverarbeitungseinheit 16 die Bildmatrixgröße an die Rekonstruktionseinheit 23 überträgt.

Anschließend kann die Rekonstruktion der Bilddaten mit der berechneten Bildmatrixgröße erfolgen.

**Figur 4** zeigt eine medizinische Bildgebungsanlage 1 in Form eines Computertomographiesystems 1. Der hier gezeigte Computertomograph 1 verfügt über eine Aufnahmeeinheit 17, umfassend eine Röntgenstrahlungsquelle 8 sowie einen Röntgenstrahlungsdetektor bzw. Röntgendetektor 9. Der Röntgendetektor 9 kann als direkt-konvertierender oder indirekt konvertierender Röntgendetektor 9 ausgebildet sein. Die Aufnahmeeinheit 17 rotiert während der Aufnahme von Projektionsdaten bzw. Röntgenprojektionen um eine Systemachse 5, die Rotationsachse des Computertomographiesystems 1, und die Röntgenquelle 8 emittiert während der Aufnahme Röntgenstrahlen 2, diese passieren den Patienten 3 zumindest in einem Teilbereich seines Körpers und werden dabei abgeschwächt und treffen auf den Röntgendetektor 9 auf.

Der Patient 3 liegt bei der Aufnahme der Projektionsdaten auf einer Patientenliege 6. Die Patientenliege 6 ist so mit einem Liegensockel 4 verbunden, dass er die Patientenliege 6 mit dem Patienten 3 trägt. Die Patientenliege 6 ist dazu ausgelegt, den Patienten 3 entlang einer Aufnahmerichtung durch die Öffnung 10 der Aufnahmeeinheit 17 zu bewegen. Die Aufnahmerichtung ist in der Regel durch die Systemachse 5 gegeben, um die die Aufnahmeeinheit 17 bei der Aufnahme von Projektionsdaten rotiert. In diesem Beispiel ist die Körperachse des Patienten 3 gleich der Systemachse 5. Bei einer Spiral-Aufnahme wird die Patientenliege 6 kontinuierlich durch die Öffnung 10 bewegt, während die Aufnahmeeinheit 17 um den Patienten 3 rotiert und Projektionsdaten aufnimmt. Damit beschreiben die Röntgenstrahlen 2 auf der Oberfläche des Patienten 3 eine Spirale. Der Patient 3 kann, muss aber bei der Untersuchung nicht bewegt werden.

Das Computertomographiesystem 1 verfügt über eine Recheneinheit 12 in Form eines Computers, welcher mit einer Anzeigeeinheit 11, beispielsweise zur graphischen Anzeige von rekonstruierten Bilddaten aufweisend die zuvor berechnete Bildmatrixgröße, bspw. in Form von medizinischen Bildaufnahmen, hier insbesondere in Form von Computer-Tomographieaufnahmen oder einem Steuermenü für das Computertomographiesystem 1, sowie einer Eingabeeinheit 7 verbunden ist. Bei der Anzeigeeinheit 11 kann es sich beispielsweise um einen LCD-, Plasma- oder OLED-Bildschirm handeln. Es kann sich weiterhin um einen berührungsempfindlichen Bildschirm handeln, welcher auch als Eingabeeinheit 7 ausgebildet ist. Ein solcher berührungsempfindlicher Bildschirm kann in das bildgebende Gerät integriert oder als Teil eines mobilen Geräts ausgebildet sein. Bei der Eingabeeinheit 7 handelt es sich beispielsweise um eine Tastatur, eine Maus, einen sogenannten "Touch-Screen" oder auch um ein Mikrofon zur Spracheingabe. Die Eingabeeinheit 7 kann eingerichtet sein, um Bewegungen eines Nutzers zu erkennen und in entsprechende Befehle zu übersetzen. Mittels Eingabeeinheit 7, insbesondere per Sprache oder Tastatur, kann beispielsweise ein Benutzer Informationen bzgl. einer medizinischen Fragestellung, eines Anfangsverdachts zu einem Patienten 3 oder dergleichen eingeben. Ein Benutzer könnte über die Eingabeeinheit 7 auch eine maximal oder minimal zulässige Bildmatrixgröße $N_{max}$, $N_{min}$ oder eine Mindest-Schrittweite $\Delta N$ eingeben.

Die Recheneinheit 12 steht mit der drehbaren Aufnahmeeinheit 17 zum Datenaustausch in Verbindung. Über die Verbindung 14 können einerseits Steuersignale für die Datenakquise bzw. Bilddatenerfassung vom Computer 12 an die Aufnahmeeinheit 17 übertragen werden. Andererseits können für den Patienten 3 aufgenommene Projektionsdaten für eine Bildrekonstruktion mittels gängiger Rekonstruktionsverfahren an den Computer 12 übertragen werden. Die Verbindung 14 ist in bekannter Weise kabelgebunden oder kabellos realisiert. Zusätzlich kann über die Verbindung 14 Information bzgl. einer medizinischen Fragestellung, eines verwendeten Aufnahmeprotokolls, die zu untersuchende Körperregion des Patienten oder dergleichen an die Recheneinheit übermittelt werden. Alternativ können die Informationen über einen mobilen, an sich bekannten computerlesbaren Datenträger, über ein PACS, Krankenhaus- oder Radiologieinformationssystem (HIS oder RIS) oder über das Internet, bspw. aus einem Cloud-Speicher auf an sich bekannte Weise der Recheneinheit 12 insbesondere automatisch zugeführt oder auf Abruf bereit gestellt werden.

Die Recheneinheit 12 in Form des Computers gemäß diesem Ausführungsbeispiel umfasst eine Datenverarbeitungseinheit 16. Sie ist insbesondere eingerichtet, alle im Bezug zu dem erfindungsgemäßen Verfahren stehenden Rechenschritte zur Bestimmung einer Bildmatrixgröße durchführen, wie mit Bezug zu Figur 1 eingangs bereits beschrieben.

Die Recheneinheit 12 umfasst in diesem Ausführungsbeispiel auch eine Rekonstruktionseinheit 23 zum Rekonstruieren von Bilddaten aus Projektionsdaten anhand der berechneten Bildmatrixgröße.

Beide Einheiten 16 und 23 können als getrennte Verarbeitungseinheiten, aber auch gemeinsam in einer Einheit ausgebildet sein. Im ersten Fall stehen die Einheiten 16 und 23 zumindest in Datenverbindung, um die durch die Einheit 16 berechnete Bildmatrixgröße zur Weiterverarbeitung an die Rekonstruktionseinheit 23 zu übertragen.

Die Recheneinheit 12 kann insbesondere mit den genannten Komponenten bzw. Einheiten über das ‚DICOM standard interchange protocol kommunizieren, andere Kommunikationsprotokolle oder ~standards und Datenformate sind ebenfalls denkbar.

Die Recheneinheit 12 kann mit einem computerlesbaren Datenträger 13 zusammenwirken, insbesondere um durch ein Computerprogramm mit Programmcode ein erfindungsgemäßes Verfahren durchzuführen. Weiterhin kann das Computerprogramm auf dem maschinenlesbaren Datenträger abrufbar gespeichert sein. Insbesondere kann es sich bei dem maschinenlesbaren Träger um eine CD, DVD, Blu-Ray Disc, einen Memory-Stick oder eine Festplatte handeln. Die Recheneinheit 12, und damit auch ihre Sub-Komponenten, kann in Form von Hard- oder in Form von Software ausgebildet sein. Beispielsweise ist die Recheneinheit 12 als ein sogenanntes FPGA (Akronym für das englischsprachige "Field Programmable Gate Array") ausgebildet oder umfasst eine arithmetische Logikeinheit. Die Recheneinheit 12, einzelne oder alle ihrer Sub-Komponenten können alternativ dezentral angeordnet sein, z.B. können einzelne Rechenschritte des Verfahrens in einem zentralen Rechenzentrum einer medizinischen Dienstleistungseinrichtung, z.B. ein Krankenhaus, oder in der Cloud ausgeführt werden. Hierbei sind insbesondere Daten- und Patientenschutz beim Datenaustausch zu berücksichtigen. Die Recheneinheit 12 kann als Komponente des Computertomographiesystems 1 oder als Cloud-basierter Computer ausgebildet sein.

In der hier gezeigten Ausführungsform ist in einem Speicher 22 der Recheneinheit 12 wenigstens ein Computerprogramm gespeichert, welches alle Verfahrensschritte des erfindungsgemäßen Verfahrens durchführt, wenn das Computerprogramm auf dem Computer 12 ausgeführt wird. Das Computerprogramm zur Ausführung der Verfahrensschritte des erfindungsgemäßen Verfahrens umfasst Programmcode. Weiterhin kann das Computerprogramm als ausführbare Datei ausgebildet sein und/oder auf einem anderen Rechensystem als dem Computer 12 gespeichert sein. Beispielsweise kann das Computertomographiesystem 1 so ausgelegt sein, dass der Computer 12 das Computerprogramm zum Ausführen des erfindungsgemäßen Verfahrens über ein Intranet oder über das Internet in seinen internen Arbeitsspeicher lädt.

Wo noch nicht explizit geschehen, jedoch sinnvoll und im Sinne der Erfindung, können einzelne Ausführungsbeispiele, einzelne ihrer Teilaspekte oder Merkmale mit einander kombiniert bzw. ausgetauscht werden, ohne den Rahmen der hiesigen Erfindung zu verlassen. Mit Bezug zu einem Ausführungsbeispiel beschriebene Vorteile der Erfindung treffen ohne explizite Nennung, wo übertragbar, auch auf andere Ausführungsbeispiele zu.

**Patentansprüche**

1. Verfahren zur Berechnung einer Bildmatrixgröße N für die Rekonstruktion von Bilddaten eines Untersuchungsobjektes (3) aus Projektionsdaten, wobei

   - die Projektionsdaten bei einer relativen Rotationsbewegung zwischen einer Strahlungsquelle (8) eines Computertomographiesystems (1) und dem Untersuchungsobjekt erfasst wurden (S1),
   - die Bildmatrixgröße **N** in Abhängigkeit der Ausdehnung des axialen Bildfeldes $F_{ax}$ des Computertomographiesystems und einem Schärfewert $\rho_c$ in den zu rekonstruierenden Bilddaten berechnet wird (S3), und
   - die berechnete Bildmatrixgröße zur Rekonstruktion der Bilddaten aus den Projektionsdaten einer Rekonstruktionseinheit (23) zur Verfügung gestellt wird (S4), und
   - die Berechnung der Bildmatrixgröße N nach

$$N = \Delta N * \left\lceil 2 * a * \frac{F_{ax} * \rho_c}{\Delta N} \right\rceil$$

   oder nach

$$N = \min\left\{N_{max},\ \max\left(N_{min}, \Delta N * \left\lceil 2 * \frac{F_{ax} * \rho_c * f}{\Delta N} + c \right\rceil\right)\right\}$$

erfolgt, wobei

$N$ - die berechnete Bildmatrixgröße,
$\Delta N$ - eine Mindest-Schrittweite,
$a$ - eine Proportionalitätskonstante
$F_{ax}$ - das axiale Bildfeld,
$\rho_c$ - der Schärfewert,
$N_{max}$ - eine maximal zulässige Bildmatrixgröße,
$N_{min}$ - eine minimal zulässige Bildmatrixgröße,
$f$ - ein freier Skalierfaktor, und
$c$ - ein freier Offset-Parameter ist.

2. Verfahren nach Anspruch 1, wobei die Berechnung der Bildmatrixgröße $N$ in Abhängigkeit einer Mindest-Schrittweite $\Delta N$ für die Bildmatrixgröße erfolgt.

3. Verfahren nach einem der vorhergehenden Ansprüche, wobei die Berechnung der Bildmatrixgröße $N$ unter Berücksichtigung von wenigstens einem Parameter des Rekonstruktionsalgorithmus und/oder seinem Rekonstruktionskern erfolgt.

4. Verfahren nach einem der vorhergehenden Ansprüche, wobei die Berechnung der Bildmatrixgröße $N$ unter Berücksichtigung einer zu erzielenden Mindest-Bildqualität erfolgt.

5. Verfahren nach einem der vorhergehenden Ansprüche, wobei die Berechnung der Bildmatrixgröße $N$ unter Berücksichtigung einer der Projektionsdatenerfassung zugrunde liegenden medizinischen Fragestellung und/oder wenigstens einem Parameter des für die Projektionsdatenerfassung verwendeten Messprotokoll und/oder eines Parameters repräsentierend die abgebildete Körperregion erfolgt.

6. Verfahren nach einem der vorhergehenden Ansprüche, wobei die Berechnung der Bildmatrixgröße $N$ unter Berücksichtigung einer verfügbaren Speicherkapazität erfolgt.

7. Verfahren nach einem der vorhergehenden Ansprüche, wobei der Schärfewert unter Berücksichtigung eines Funktionals der Modulationsübertragungsfunktion des Computertomographiesystems berechnet wird.

8. Recheneinheit (12) zur Berechnung einer Bildmatrixgröße $N$ für die Rekonstruktion von Bilddaten eines Untersuchungsobjektes (3) aus Projektionsdaten, wobei die Recheneinheit ausgebildet ist,

- Projektionsdaten, die bei einer relativen Rotationsbewegung zwischen einer Strahlungsquelle (8) eines Computertomographiesystems (1) und dem Untersuchungsobjekt erfasst wurden, zu erfassen,
- die Bildmatrixgröße $N$ gemäß einem der Ansprüche 1 bis 7 zu berechnen.

9. Recheneinheit (12) nach Anspruch 8, umfassend eine Rekonstruktionseinheit (23), die ausgebildet ist, die berechnete Bildmatrixgröße $N$ zu erfassen und damit die Bilddaten aus den Projektionsdaten zu rekonstruieren.

10. Computertomographiesystem (1) zur Berechnung einer Bildmatrixgröße $N$ für die Rekonstruktion von Bilddaten eines Untersuchungsobjektes (3) aus Projektionsdaten, umfassend

- eine Recheneinheit (12) gemäß Anspruch 8, und
- eine Rekonstruktionseinheit (23) zum Rekonstruieren von Bilddaten aufweisend die berechnete Bildmatrixgröße $N$ aus den Projektionsdaten.

11. Computerprogramm, welches direkt in eine Speichereinheit (22) einer Recheneinheit (12) gemäß Anspruch 8 ladbar ist, mit Programmabschnitten, um die Schritte des Verfahrens nach einem der Ansprüche 1 bis 7 auszuführen, wenn das Computerprogramm in der Recheneinheit ausgeführt wird.

**12.** Computerlesbares Medium (13), auf welchem von einer Recheneinheit (12) nach Anspruch 8 einlesbare und ausführbare Programmabschnitte gespeichert sind, um alle Schritte des Verfahrens nach einem der Ansprüche 1 bis 7 auszuführen, wenn die Programmabschnitte von der Recheneinheit ausgeführt werden.

**Claims**

**1.** Method for calculating an image matrix size N for the purpose of reconstructing image data of an examination subject (3) from projection data, wherein

- the projection data was acquired (S1) during a relative rotational movement between a radiation source (8) of a computed tomography system (1) and the examination subject,
- the image matrix size $N$ is calculated (S3) as a function of the extent of the axial field of view $F_{ax}$ of the computed tomography system and a sharpness value $\rho_c$ in the image data to be reconstructed, and
- the calculated image matrix size is made available (S4) to a reconstruction unit (23) for the purpose of reconstructing the image data from the projection data, and
- the image matrix size $N$ is calculated according to

$$N = \Delta N * \left\lceil 2 * a * \frac{F_{ax} * \rho_c}{\Delta N} \right\rceil$$

or according to

$$N = \min \left\{ N_{max}, \; max \left( N_{min}, \Delta N * \left\lceil 2 * \frac{F_{ax} * \rho_c * f}{\Delta N} + c \right\rceil \right) \right\},$$

where

$N$ - is the calculated image matrix size,
$\Delta N$ - is a minimum increment,
$a$ - is a proportionality constant,
$F_{ax}$ - is the axial field of view,
$\rho_c$ - is the sharpness value,
$N_{max}$ - is a maximum permitted image matrix size,
$N_{min}$ - is a minimum permitted image matrix size,
$f$ - is a free scaling factor, and
$c$ - is a free offset parameter.

**2.** Method according to claim 1, wherein the image matrix size $N$ is calculated as a function of a minimum increment $\Delta N$ for the image matrix size.

**3.** Method according to one of the preceding claims, wherein the image matrix size $N$ is calculated taking into account at least one parameter of the reconstruction algorithm and/or its reconstruction kernel.

**4.** Method according to one of the preceding claims, wherein the image matrix size $N$ is calculated taking into account a minimum image quality that is to be achieved.

**5.** Method according to one of the preceding claims, wherein the image matrix size $N$ is calculated taking into account a medical issue underlying the projection data acquisition and/or at least one parameter of the measurement protocol used for the projection data acquisition and/or a parameter representing the imaged body region.

**6.** Method according to one of the preceding claims, wherein the image matrix size $N$ is calculated taking into account an available storage capacity.

**7.** Method according to one of the preceding claims, wherein the sharpness value is calculated taking into account a functional of the modulation transfer function of the computed tomography system.

8. Computing unit (12) for calculating an image matrix size **N** for the purpose of reconstructing image data of an examination subject (3) from projection data, wherein the computing unit is embodied for

- acquiring projection data recorded during a relative rotational movement between a radiation source (8) of a computed tomography system (1) and the examination subject,
- calculating the image matrix size **N** according to one of claims 1 to 7.

9. Computing unit (12) according to claim 8, comprising a reconstruction unit (23) which is embodied to register the calculated image matrix size **N** and use the same to reconstruct the image data from the projection data.

10. Computed tomography system (1) for calculating an image matrix size **N** for the purpose of reconstructing image data of an examination subject (3) from projection data, comprising

- a computing unit (12) according to claim 8, and
- a reconstruction unit (23) for reconstructing image data having the calculated image matrix size **N** from the projection data.

11. Computer program which can be loaded directly into a memory unit (22) of a computing unit (12) according to claim 8 and has program sections for performing the steps of the method according to one of claims 1 to 7 when the computer program is executed in the computing unit.

12. Computer-readable medium (13) on which program sections that can be read in and executed by a computing unit (12) according to claim 8 are saved in order to perform all steps of the method according to one of claims 1 to 7 when the program sections are executed by the computing unit.


**Revendications**

1. Procédé de calcul d'une dimension N de matrice d'image pour la reconstruction de données d'image d'un objet (3) à examiner à partir de données de projection, dans lequel

- on a relevé (S1) les données de projection, lors d'un mouvement de rotation relatif entre une source (8) de rayonnement d'un système (1) de tomodensitométrie assisté par ordinateur et l'objet à examiner,
- on calcule (S3) la dimension **N** de la matrice d'image en fonction de l'étendue du champ $F_{ax}$ axial d'image du système de tomodensitométrie assisté par ordinateur et d'une valeur $\rho_c$ de netteté dans les données d'image à reconstruire, et
- on met (S4) à disposition d'une unité (23) de reconstruction la dimension calculée de la matrice d'image pour la reconstruction des données d'image à partir des données de projection, et
- on effectue le calcul de la dimension **N** de la matrice d'image suivant

$$N = \Delta N * \left\lceil 2 * a * \frac{F_{ax} * \rho_c}{\Delta N} \right\rceil$$

ou suivant

$$N = \min \left\{ N_{max}, \ max \left( N_{min}, \Delta N * \left\lceil 2 * \frac{F_{ax} * \rho_c * f}{\Delta N} + c \right\rceil \right) \right\}$$

dans lesquelles

**N** est la dimension calculée de la matrice d'image,
$\Delta N$ est une largeur de pas minimum,
**a** est une constante de proportionnalité,
$F_{ax}$ est le champ axial d'image,

$\rho_c$ est la valeur de netteté,

$N_{max}$ est une dimension admissible au maximum de la matrice d'image,

$N_{min}$ est une dimension admissible au minimum de la matrice d'image,

$f$ est un facteur libre de mise à l'échelle, et

$c$ est un paramètre libre de décalage.

2. Procédé suivant la revendication 1, dans lequel on effectue le calcul de dimension **N** de la matrice d'image en fonction d'une largeur $\Delta N$ de pas minimum pour la dimension de la matrice d'image.

3. Procédé suivant l'une des revendications précédentes, dans lequel le calcul de la dimension **N** de la matrice d'image s'effectue en tenant compte d'au moins un paramètre de l'algorithme de reconstruction et/ou de son noyau de reconstruction.

4. Procédé suivant l'une des revendications précédentes, dans lequel on effectue le calcul de la dimension **N** de la matrice d'image en tenant compte d'une qualité d'image minimum à obtenir.

5. Procédé suivant l'une des revendications précédentes, dans lequel on effectue le calcul de la dimension **N** de la matrice d'image en tenant compte d'un questionnement médical à la base du relevé de données de projection et/ou d'au moins un paramètre du protocole de mesure utilisé pour le relevé des données de projection et/ou d'un paramètre représentant la région du corps représenté.

6. Procédé suivant l'une des revendications précédentes, dans lequel on effectue le calcul de la dimension **N** de la matrice d'image en tenant compte d'une capacité de mémoire disponible.

7. Procédé suivant l'une des revendications précédentes, dans lequel on calcule la valeur de netteté en tenant compte d'une fonctionnalité de la fonction de transfert de modulation du système de tomodensitométrie assisté par ordinateur.

8. Unité (12) de calcul pour le calcul d'une dimension **N** de la matrice d'image pour la reconstruction de données d'image d'un objet (3) à examiner à partir de données de projection, l'unité de calcul étant constituée pour

   - relever des données de projection, qui ont été relevées lors d'un mouvement de rotation relatif entre une source (8) de rayonnement d'un système (1) de tomodensitométrie assisté par ordinateur et l'objet à examiner,
   - calculer la dimension **N** de la matrice d'image suivant l'une des revendications 1 à 7.

9. Unité (12) de calcul suivant la revendication 8, comprenant une unité (23) de reconstruction, qui est constituée pour relever la dimension **N** calculée de la matrice d'image et reconstruire ainsi les données d'image à partir des données de projection.

10. Système (1) de tomodensitométrie assisté par ordinateur pour le calcul d'une dimension **N** de la matrice d'image pour la reconstruction de données d'image d'un objet (3) à partir de données de projection comprenant

    - une unité (12) de calcul suivant la revendication 8, et
    - une unité (23) de reconstruction pour la reconstruction de données d'image ayant la dimension **N** calculée de la matrice d'image à partir des données de projection.

11. Programme d'ordinateur, qui peut être chargé directement dans une unité (22) de mémoire d'une unité (12) de calcul suivant la revendication 8, comprenant des parties de programme pour effectuer les stades du procédé suivant l'une des revendications 1 à 7, lorsque le programme d'ordinateur est réalisé dans l'unité de calcul.

12. Support (13), déchiffrable par ordinateur, sur lequel sont mises en mémoire des parties de programme pouvant être déchiffrées et réalisées par une unité (12) de calcul suivant la revendication 8, pour effectuer tous les stades du procédé suivant l'une des revendications 1 à 7, lorsque les parties de programme sont réalisées par l'unité de calcul.

FIG 1

FIG 2

f=1, c=0

FIG 3

f=0.8, c=0

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **AKINORI HATA et al.** Effect of Matrix Size on the Image Quality of Ultra-high-resolution CT of the Lung. *Acad. Radiol.,* 2018, vol. 25, 869-876

- A GUIDE TO COMPUTED TOMOGRAPHY SYSTEM SPECIFICATIONS. **PAUL BURSTEIN et al.** Interim Report. WRIGHT-PATTERSON AIR FORCE BASE, Juli 1989